**Europäisches Patentamt**

**European Patent Office**

**Office européen des brevets**

(19)

(11) Veröffentlichungsnummer : **0 135 763**
**B1**

(12)
# EUROPÄISCHE PATENTSCHRIFT

(45) Veröffentlichungstag der Patentschrift :
28.09.88

(51) Int. Cl.⁴ : **B 60 R 25/02**

(21) Anmeldenummer : **84109522.7**

(22) Anmeldetag : **10.08.84**

(54) Vorrichtung zum Sperren der Drehbewegung einer Kraftfahrzeug-Lenkspindel.

(30) Priorität : **17.09.83 DE 3333648**

(43) Veröffentlichungstag der Anmeldung :
**03.04.85 Patentblatt 85/14**

(45) Bekanntmachung des Hinweises auf die Patenterteilung : **28.09.88 Patentblatt 88/39**

(84) Benannte Vertragsstaaten :
**DE FR GB IT**

(56) Entgegenhaltungen :
**WO-A-83 /042 28**
**DE-A- 2 059 215**
**DE-B- 1 293 049**
**FR-A- 2 283 287**
**GB-A- 1 540 259**

(73) Patentinhaber : **NEIMAN**
**39 Avenue Marceau**
**F-92400 Courbevoie (FR)**

(72) Erfinder : **Brückner, Rolf**
**Von-Fraunhofer-Strasse 31**
**D-5620 Velbert 1 (DE)**

(74) Vertreter : **Patentanwaltsbüro Cohausz & Florack**
**Postfach 14 01 47**
**D-4000 Düsseldorf 1 (DE)**

EP 0 135 763 B1

Jouve, 18, rue St-Denis, 75001 Paris, France

**Beschreibung**

Die Erfindung betrifft eine Vorrichtung zum Sperren der Drehbewegung einer Kraftfahrzeug-Lenkspindel mit mindestens zwei dicht oder in geringem Abstand beieinander liegenden, insbesondere parallel oder radial zur Lenkspindel angeordneten Sperriegeln, die in der sperrenden Stellung in mindestens einer Ausnehmung der Lenkspindel einliegen und durch den Zylinderkern über Zwischenteile in ihrer Längsrichtung gleichzeitig bewegbar sind.

Durch die WO-A-83/03580 ist ein Lenkschloß vorangemeldet, das mindestens zwei nebeneinander liegende Sperriegel aufweist, die in ihrer Längsrichtung durch eine Kurvenscheibe bewegt werden. Die Betätigung dieser zwei Sperriegel erfolgt nicht ganz gleichzeitig bzw. synchron, und ferner ist es erforderlich, daß die Achse der Kurvenscheibe parallel zur Lenkspindelachse ist, sodaß die Vorrichtung dann nicht eingesetzt werden kann, wenn die Kurvenscheibe auf einer axialen Verlängerung des Zylinderkerns eines Schlosses befestigt ist und Lenkspindel und Schloßachse zueinander winklig stehen.

Aufgabe der Erfindung ist es, eine Vorrichtung der eingangs genannten Art derart zu verbessern, daß bei einer schrägen Anordnung von Lenkspindel und Schloßachse die Sperriegel auf einfache und sichere Weise gleichzeitig betätigbar sind.

Diese Aufgabe wird erfindungsgemäß dadurch gelöst, daß eine Verlängerung 6 des Zylinderkerns 4 eine Kurven- oder Nockenscheibe 7 mit einer Ausnehmung 7a trägt, in der bei Sperrstellung der Sperriegel eine alle Sperriegel 12, 13 betätigende Mitnehmerplatte 8 mit einem Bereich oder Vorsprung 8a zur Einlage gelangt, daß die Mitnehmerplatte 8 durch den Rand der Scheibe 7 verschwenkbar ist, und daß Mittel vorgesehen sind, die ein Einfallen der Mitnehmerplatte 8 in die Ausnehmung 7a der Kurven- oder Nockenscheibe 7 verhindern, wenn der Schlüssel noch nicht abgezogen ist.

Da die Sperriegel auch bei einer schrägen Stellung zu der Mitnehmerplatte sicher durch diese bewegbar sind, können die Sperriegel entsprechend der Lenkspindel schräg zur Schloßachse stehen, so daß unabhängig von der Schrägstellung der Achsen von Lenkspindel und Schloß stets eine sichere Betätigung erreicht wird. Die verschiedensten Winkel von Schloß und Lenkspindel zueinander sind zulässig, so daß das Schloß an die unterschiedlichsten Kraftfahrzeuge leicht angepaßt werden kann.

Darüberhinaus werden eine einfache Lagerung der Mitnehmerplatte, eine einfache Montage der Schloßteile als auch eine platzsparende Bauweise erreicht.

Vorteilhafte Ausgestaltungen der Erfindung sind in den Unteransprüchen aufgeführt.

Ein Ausführungsbeispiel der Erfindung ist in den Zeichnungen dargestellt und wird im folgenden näher beschrieben. Es zeigen

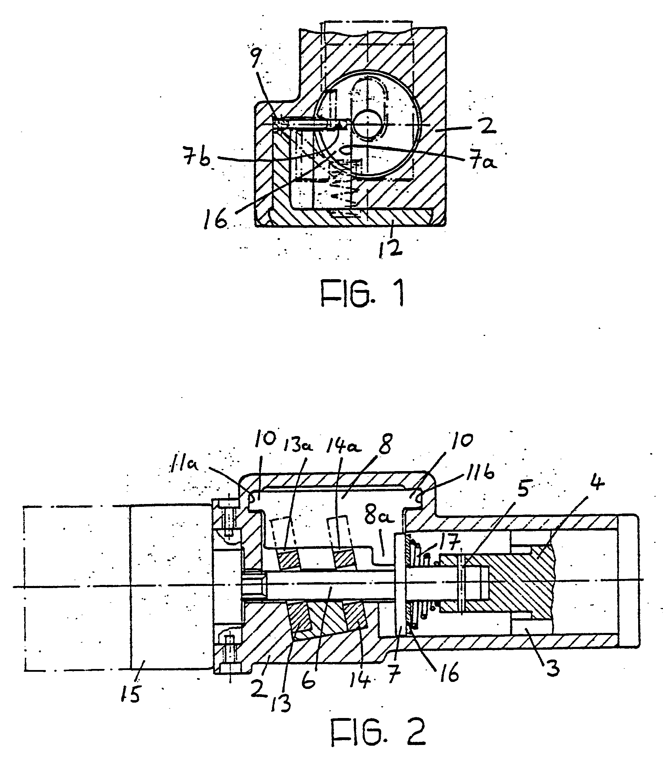

Fig. 1 einen Schnitt durch die Vorrichtung rechtwinklig zur Schloßachse entlang der Linie I — I,

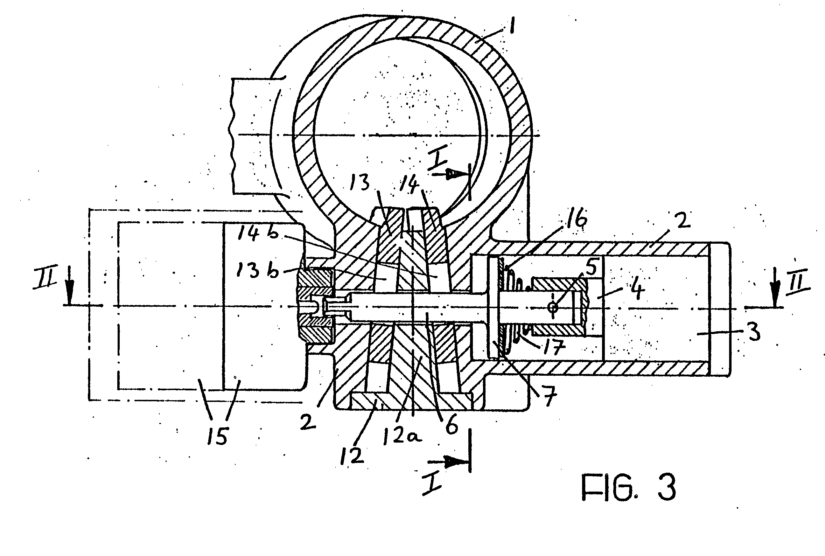

Fig. 2 einen Schnitt längs der Schloßachse nach Linie II — II in Fig. 3 und

Fig. 3 einen Schnitt längs der Schloßachse, etwa quer zur Lenkspindel.

An dem rohrförmigen Mantel 1, der eine nicht dargestellte Lenkspindel umgibt, ist ein rohrförmiges Schloßgehäuse 2 angeformt, in dem ein Schließzylindergehäuse 3 unverschieblich einliegt. Das Schloßgehäuse 2 liegt etwa tangential zum Mantel 1 und hierbei nicht rechtwinklig zur Achse des Mantels und der Lenkspindel sondern um 20 bis 50 Grad verdreht.

Im Schließzylindergehäuse 3 ist ein Zuhaltungen aufweisender Zylinderkern 4 axial beweglich und um seine Achse verdrehbar angeordnet, der durch einen nicht dargestellten Schlüssel erst dann verschiebbar ist, wenn der Schlüssel eingesteckt wird. Am Zylinderkern 4 ist durch einen Stift 5 eine wellenförmige Verlängerung 6 koaxial befestigt, auf der eine im wesentliche kreisförmige Kurven- oder Nockenscheibe 7 rechtwinklig und koaxial fest ist. Die Scheibe 7 weist über einen Drehwinkel von ca. 70 bis 90 Grad eine etwa sektorförmige Ausnehmung 7a auf, in die eine Mitnehmerplatte 8 einschwenkt, wenn in der Sperrstellung des Zylinderkerns die Ausnehmung der Mitnehmerplatte gegenüberliegt.

Die Mitnehmerplatte 8 ist um eine zur Zylinderkernachse paralle Achse 9 aus der Ausnehmung 7a und damit aus der radialen Stellung zur Scheibe 7 herausschwenkbar und liegt danach auf dem teilkreisförmigen Umfang der Scheibe 7. Die aus einem Blech gefertigte Platte 8 weist im Bereich der Achse 9 Nasen 10 auf, die in Ausnehmungen 11a, 11b des Gehäuses 2 einliegen, wobei die Ausnehmungen nach außen hin durch ein Verschlußstück 12 verschließbar sind. Das Verschlußstück 12 wird von außen in das Gehäuse 12 eingeschoben, bildet einen Teil der Gehäuseaußenwand und weist nach innen einen Vorsprung 12a auf, der zwischen zwei Sperriegeln 13, 14 liegt und mit seinen Seitenflächen diese führt. Eine im Vorsprung 12a befindliche Bohrung führt die Verlängerung 6, die mit ihrem freien Ende in einen elektrischen Schalter 15 zu seiner Betätigung eingreift.

Die Sperriegel 13, 14 sind radial zur Lenkspindel und mit ihren Seitenflächen parallel zur Lenkspindelachse nahe beieinander angeordnet. Sie liegen damit nicht rechtwinklig zur Verlängerung 6 sondern in einem Winkel von 5 bis 10 Grad. Die Sperriegel 13, 14 weisen an ihrer der Mitnehmerplatte 8 zugewandten Stirnseite jeweils eine schlitzförmige Ausnehmung 13a, 14a auf, in die die Mitnehmerplatte 8 hineinreicht. Durch eine Bewegung der Platte 8 werden die Sperriegel in ihrer Längsrichtung radial zur Lenkspindel bewegt, wobei eine Bewegung aus der Sperrstellung von der Lenkspindel weg gegen den Druck von nicht dargestellten Schraubendruckfedern geschieht, die auf der der Lenkspindel gegenübeliegenden Seiten der Sperriegel anliegen.

Auf der den Sperriegeln 13, 14 gegenüberliegenden Seite der Kurven- oder Nockenscheibe 7 liegt an der Scheibe 7 eine Kreisscheibe 16 an, die durch eine konische Schraubendruckfeder 17 gegen die Scheibe 7 gedrückt wird. Die Kreisscheibe 16 weist einen etwas geringeren Radius auf als der der Scheibe 7 und überdeckt die Ausnehmung 7a der Kurvenoder Nockenscheibe 7. Die Kreisscheibe 16 ist auf der Verlängerung 6 axial beweglich oder verschwenkbar, wenn durch Eindrücken des Zylinderkerns in das Schloßgehäuse die Scheibe 7 zu den Sperriegeln und damit zur Platte 8 hin bewegt wird und hierbei die Ausnehmung 7a der Scheibe 7 im Bereich der Platte 8 liegt, sodaß ein Vorsprung 8a der Platte 8 die Scheibe 16 von einer weiteren axialen Bewegung gegen den Druck der Schraubendruckfeder 17 zurückhält.

Die Funktionsweise ist wie folgt :

Bei Einstecken des Schlüssels in den Zylinderkern 4 wird dieser von Hand axial verschoben und hiermit die drehund axialfeste Scheibe 7. Da in dieser Stellung die Mitnehmerplatte 8 etwa radial zur Scheibe 7 liegt und die Ausnehmung 7a in Höhe der Platte 8, gelangt der Vorsprung 8a in die Ausnehmung 7a und verhindert, daß die Kreisscheibe 16 weiter zu den Sperriegeln 14 hinbewegt wird, wogegen eine solche Bewegung der Scheibe 7 nicht verhindert wird, sodaß der Vorsprung 8a in der Ausnehmung 7a einliegt. Bei einem Verdrehen des Zylinderkerns 4 durch den Schlüssel bewegt ein Seiten- oder Nockenrand 7b der Ausnehmung 7a die Platte 8 und verschwenkt sie aus der Ausnehmung 7a heraus, wobei die Platte 8 die Sperriegel 13, 14 aud der sperrenden Stellung herauszieht.

Die Mitnehmerplatte 8 liegt nunmehr bei Weiterdrehen der Scheibe 7 an dem kreisförmigen Außenrand der Scheibe 7 an, sodaß ein Rückschwenken und ein Einfallen der Sperriegel in die Sperrstellung verhindert wird. Wird nunmehr die Scheibe 7 durch Drehen des Zylinderkerns in die Schlüsseleinsteckstellung zurückgedreht so gelangt der Vorsprung 8a in den Bereich der Ausnehmung 7a. Dennoch fällt in dieser Stellung die Platte 8 nicht in die Ausnehmung 7a ein, sondern liegtnunmehr auf der Kreisscheibe 16 an, da die Kreisscheibe 16 an die Scheibe 7 sich anlegen konnte, als die Platte 8 auf dem Außenumfang der Scheibe 7 lag.

Die Platte 8 wird von der Kreisscheibe 16 solange in der ausgeschwenkten Stellung gehalten (Sperrbereitschaftsstellung), bis durch vollständigen Schlüsselabzug der Zylinderkern 4 in die ursprüngliche Stellung zurückgezogen und damit die Scheiben 7 und 8 aus dem Bereich der Platte 8 gezogen werden. Erst hiernach verschwenkt die Platte 8 in ihre Ausgangsstellung und nehmen die Sperriegel 13, 14 ihre sperrende Stellung ein.

**Patentansprüche**

1. Vorrichtung zum Sperren der Drehbewegung einer Kraftfahrzeug-Lenkspindel mit mindestens zwei dicht oder in geringerem Abstand beieinander liegenden, insbesondere parallel oder radial zur Lenkspindel angeordneten Sperriegeln (13, 14), die in der sperrenden Stellung in mindestens einer Ausnehmung der Lenkspindel einliegen und durch den Zylinderkern (4) über Zwischenteile (7, 8) in ihrer Längsrichtung gleichzeitig bewegbar sind, dadurch gekennzeichnet, daß eine Verlängerung (6) des Zylinderkerns (4) eine Kurvenoder Nockenscheibe (7) mit einer Ausnehmung (7a) trägt, in der bei Sperrstellung der Sperriegel eine alle Sperriegel (12, 13) betätigende Mitnehmerplatte (8) mit einem Bereich oder Vorsprung (8a) zur Einlage gelangt, daß die Mitnehmerplatte (8) durch den Rand (7b) der Scheibe (7) verschwenkbar ist, und daß Mittel (16) vorgesehen sind, die ein Einfallen der Mitnehmerplatte (8) in die Ausnehmung (7a) der Kurven- oder Nockenscheibe (7) verhindern, wenn der Schlüssel noch nicht abgezogen ist.

2. Vorrichtung nach Anspruch 1, dadurch gekennzeichnet, daß der Zylinderkern (4) durch den Schlüssel axial beweglich ist und neben der Kurven- oder Nockenscheibe (7) ein Teil, insbesondere eine Kreisscheibe (16) liegt, das die Ausnehmung (7a) der Kurven- oder Nockenscheibe (7) überbrückt, und das bei einer Axialbewegung der Kurven- oder Nockenscheibe (7) durch den Zylinderkern (4) die Kreisscheibe (16) von der Kurven- oder Nockenscheibe (7) durch die Mitnehmerplatte (8) gegen Federdruck abhebbar ist.

3. Vorrichtung nach Anspruch 2, dadurch gekennzeichnet, daß der Durchmesser der Kreisscheibe (16) etwas geringer ist als der Durchmesser der Kurven- oder Nockenscheibe (7).

4. Vorrichtung nach einem der Ansprüche 1 bis 3, dadurch gekennzeichnet, daß die Mitnehmerplatte (8) aus Blech gefertigt ist.

5. Vorrichtung nach einem der Ansprüche 1 bis 4, dadurch gekennzeichnet, daß die Mitnehmerplatte (8) an der von der Zylinderkernverlängerung abgewandten Seite auf gegenüberliegenden Seiten Vorsprünge (10) in der Ebene der Platte (8) aufweist, die als Achszapfen in Ausnehmungen (11a, 11b) des Schloßgehäuses (2) einliegen, die durch ein von außen einsetzbares Verschlußstück (12) geschlossen sind.

6. Vorrichtung nach Anspruch 5, dadurch gekennzeichnet, daß das Verschlußstück (12) mit einer Verlängerung (12a) zwischen den Sperriegeln (13, 14) einliegt und diese führt.

7. Vorrichtung nach einem der Ansprüche 1 bis 6, dadurch gekennzeichnet, daß in der Sperrstellung der Sperriegel (13, 14) die Mitnehmerplatte (8) etwa radial und parallel zur Schloßachse in der Ausnehmung (7a) der Kurven- oder Nockenscheibe (7) einliegt.

8. Vorrichtung nach einem der Ansprüche 1 bis 7, dadurch gekennzeichnet, daß die Schwenkachse der Mitnehmerplatte (8) etwa parallel zur Zylinderkernachse ist.

9. Vorrichtung nach einem der Ansprüche 1 bis 8, dadurch gekennzeichnet, daß die Lenkspindelachse in einem Winkel von ungleich 90 Grad schräg zur Schloßachse steht und die Sperriegelseitenflächen etwa parallel zur Lenkspindelachse sind.

10. Vorrichtung nach einem der Ansprüche 1 bis 9, dadurch gekennzeichnet, daß die Mitnehmerplatte (8) in seitliche Ausnehmungen (13a, 14a) der Sperriegel (13, 14) eingreift.

11. Vorrichtung nach Anspruch 10, dadurch gekennzeichnet, daß der Bereich der Mitnehmerplatte (8) der in die Ausnehmungen (13a, 14a) der Sperriegel (13, 14) eingreift der Zylinderkernverlängerung (6) zugewandt ist.

12. Vorrichtung nach Anspruch 10 oder 11, dadurch gekennzeichnet, daß die Ausnehmungen (13a, 14a) der Sperriegel (13, 14) der Zylinderkernverlängerung (6) abgewandt sind.

13. Vorrichtung nach einem der Ansprüche 1 bis 12, dadurch gekennzeichnet, daß die Zylinderkernverlängerung (6) durch eine Ausnehmung (13b, 14b) jedes Sperriegels (13, 14) hindurch verläuft.

## Claims

1. A device for locking the rotary movement of a motor vehicle steering column comprising, disposed in particular parallel with or radially in respect of the steering column and closely adjacent to or at a small distance from each other, at least two locking bolts (13, 14) which, in the locking position, engage at least one recess in the steering column, being adapted for movement in their longitudinal direction simultaneously by means of the cylinder core (4) or intermediate parts (7, 8), characterised in that an extension (6) of the cylinder core (4) carries a cam or cam plate (7) with a cut out (7a) in which, when the locking bolts are in the locked position, a portion of or a projection (8a) on a driving plate (8) which actuates all the locking bolts (12, 13) can engage, and in that the driving plate (8) is adapted to be pivoted by the rim (7b) of the disc (7) and in that means (16) are provided which prevent engagement of the driving plate into the cut out (7a) in the cam or cam plate (7) so long as the key has not been withdrawn.

2. A device according to Claim 1, characterised in that the cylinder core (4) is adapted for axial movement by the key and in that there is alongside the cam or cam plate (7) a part, particularly a circular disc (16), which bridges the cut out (7a) in the cam or cam plate (7) and which upon an axial movement of the cam or cam plate (7) by virtue of the cylinder core (4), the circular disc (14) can be lifted off the cam or cam plate (7) by the driving plate (8) against spring pressure.

3. A device according to Claim 2, characterised in that the diameter of the circular disc (16) is somewhat smaller than the diameter of the cam or cam plate (7).

4. A device according to one of Claims 1 to 3, characterised in that the driving plate (8) is made from sheet metal.

5. A device according to one of Claims 1 to 4, characterised in that the driving plate (8) comprises on that side which is remote from the extension of the cylinder core, and on opposite sides, projections (10) disposed in the plane of the plate (8) and which, as axial studs, engage recesses (11, 11b) in the lock housing (2) which are closed by a closure piece (12) which can be inserted from outside.

6. A device according to Claim 5, characterised in that the closure piece (12) has an extension (12a) which engages between and guides the locking bolts (13, 14).

7. A device according to one of Claims 1 to 6, characterised in that in the locked position of the locking bolts (13, 14), the driving plate (8) engages the cut out (7a) in the cam or cam plate (7) substantially radially and parallel with the lock axis.

8. A device according to one of Claims 1 to 7, characterised in that the pivoting axis of the driving plate (8) is substantially parallel with the axis of the cylinder core.

9. A device according to one of Claims 1 to 8, characterised in that the steering column axis is inclined in respect of the lock axis, standing at an angle of other than 90º, the lateral faces of the locking bolts being substantially parallel with the steering column axis.

10. A device according to one of Claims 1 to 9, characterised in that the driving plate (8) engages lateral recesses (13a, 14a) on the locking bolts (13, 14).

11. A device according to Claim 10, characterised in that the portion of the driving plate (8) which engages the recesses (13a, 14a) of the locking bolts (13, 14) faces the cylinder core extension (6).

12. A device according to Claim 10 or 11, characterised in that the recesses (13a, 14a) of the locking bolts (13, 14) face away from the cylinder core extension (6).

13. A device according to one of Claims 1 to 12, characterised in that the cylinder core extension (6) extends through a recess (13b, 14b) in each locking bolt (13, 14).

## Revendications

1. Dispositif pour le blocage de la rotation d'un arbre de direction de véhicule automobile avec au moins deux pênes de verrouillage (13, 14) disposés adjacents ou à faible distance l'un de l'autre, en particulier disposés parallèles ou radiaux par rapport à l'arbre de direction, qui sont logés dans au moins un évidement de l'arbre de direction en position de verrouillage et qui sont mobiles simultanément selon leur direction longitudinale par le barillet (4) par l'intermédiaire de pièces intermédiaires (7, 8), caractérisé par le fait qu'un prolongement (6) du barillet (4) porte une came ou un disque à cames (7) avec un évidement (7a), dans lequel, en position de verrouillage des pênes de verrouillage, est logé un plateau entraîneur (8) par une zone ou une saillie (8a), que le plateau entraîneur (8) peut pivoter par le bord (7b) du disque (7), et que des moyens (16) sont prévus qui empêchent une inclinaison du plateau entraîneur (8) dans l'évidement (7a) de la came ou du disque à cames (7) lorsque la clé n'a pas encore été retirée.

2. Dispositif selon la revendication 1, caractérisé par le fait que le barillet (4) est mobile axialement par la clé et une pièce, en particulier un disque circulaire (16) se trouve à côté de la came ou du disque à cames (7), qui recouvre l'évidement (7a) de la came ou du disque à cames (7), et que, par un mouvement axial de la came ou du disque à cames (7) par le barillet (4), le disque circulaire (16) peut être soulevé par rapport à la came ou au disque à cames (7) par le plateau entraîneur (8) contre une pression de ressort.

3. Dispositif selon la revendication 2, caractérisé par le fait que le diamètre du disque circulaire (16) est légèrement plus faible que le diamètre de la came ou du disque à cames (7).

4. Dispositif selon l'une des revendications 1 à 3, caractérisé par le fait que le plateau entraîneur (8) est fabriqué en tôle.

5. Dispositif selon l'une des revendications 1 à 4, caractérisé par le fait que le plateau entraîneur (8) présente, sur la face opposée au prolongement du barillet, des saillies (10) sur des côtés opposés du plan du plateau (8), qui sont logées en tant que tenons d'axe dans des évidements (11a, 11b) du boîtier (2) de serrure qui sont fermés par une pièce de fermeture (12) montable depuis l'extérieur.

6. Dispositif selon la revendication 5, caractérisé par le fait que la pièce de fermeture (12) est logée par un prolongement (12a) entre les pênes de verrouillage (13, 14) et guide ceux-ci.

7. Dispositif selon l'une des revendications 1 à 6, caractérisé par le fait que, en position de verrouillage des pênes de verrouillage, le plateau entraîneur (8) est logé sensiblement radial et parallèle à l'axe de serrure dans l'évidement (7a) de la came ou du disque à cames (7).

8. Dispositif selon l'une des revendications 1 à 7, caractérisé par le fait que l'axe de pivotement du plateau entraîneur (8) est sensiblement parallèle à l'axe du barillet.

9. Dispositif selon l'une des revendications 1 à 8, caractérisé par le fait que l'arbre de direction se trouve oblique par rapport à l'axe de serrure d'un angle différent de 90° et les surfaces latérales des pênes de verrouillage sont sensiblement parallèles à l'axe de l'arbre de direction.

10. Dispositif selon l'une des revendications 1 à 9, caractérisé par le fait que le plateau entraîneur (8) pénètre dans des évidements latéraux (13a, 14a) des pênes de verrouillage (13, 14).

11. Dispositif selon la revendication 10, caractérisé par le fait que la zone du plateau entraîneur (8) qui pénètre dans les évidements (13a, 14a) des pênes de verrouillage est tournée vers le prolongement (6) du barillet.

12. Dispositif selon la revendication 10 ou 11, caractérisé par le fait que les évidements (13a, 14a) des pênes de verrouillage (13, 14) sont opposés au prolongement (6) du barillet.

13. Dispositif selon l'une des revendications 1 à 12, caractérisé par le fait que le prolongement (6) du barillet s'étend à travers un évidement (13b, 14b) de chaque pêne de verrouillage (13, 14).

FIG. 1

FIG. 2

1

0 135 763

FIG. 3